(19) **Europäisches Patentamt / European Patent Office / Office européen des brevets**

(11) **EP 3 728 902 B1**

(12) # EUROPEAN PATENT SPECIFICATION

(45) Date of publication and mention
of the grant of the patent:
**20.04.2022 Bulletin 2022/16**

(21) Application number: **18815706.9**

(22) Date of filing: **12.12.2018**

(51) International Patent Classification (IPC):
**F16H 57/04** (2010.01)    **B60K 6/445** (2007.10)

(52) Cooperative Patent Classification (CPC):
**F16H 57/0452; F16H 57/0413; F16H 57/0436;
F16H 57/0447; F16H 57/0449**

(86) International application number:
**PCT/EP2018/084440**

(87) International publication number:
**WO 2019/121183 (27.06.2019 Gazette 2019/26)**

(54) **MOTORIZED APPARATUS**

MOTORVORRICHTUNG

APPAREIL MOTORISÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.12.2017 IT 201700148415**

(43) Date of publication of application:
**28.10.2020 Bulletin 2020/44**

(73) Proprietor: **Vhit S.P.A. Societa Unipersonale
26010 Offanengo (IT)**

(72) Inventor: **FAUDA, Alessandro
24047 TREVIGLIO (BG) (IT)**

(74) Representative: **Bee, Joachim
Robert Bosch GmbH
Zentralabteilung Patente
Postfach 30 02 20
70442 Stuttgart (DE)**

(56) References cited:
**EP-A1- 1 154 251        WO-A1-2004/012327
US-A1- 2003 230 996     US-A1- 2011 282 551**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Processed by Luminess, 75001 PARIS (FR)

**Description**

The present invention relates to a motorized apparatus provided with a plurality of sensors.

Vehicles provided with a plurality of sensors of various kinds and forms and electronic control units are known. Many of these sensors may be of the same type and be in large numbers: thermocouples, pressure gauges, viscosimeters, flowmeters, speedometers, etc. etc.

In particular a corresponding sensor is associated with each parameter to be determined. A known apparatus is disclosed by US2011/282551, which shows a method for operation of an apparatus, said apparatus being a vehicle and comprising a motor; a means for transmitting motion generated by the motor; a first electric pump, said first electric pump being a circulation electric pump of a lubricating fluid of the motor and/or a transmission means and comprising a rotor, which moves the lubricating fluid and a control electronics; a reservoir of the lubricating fluid from which the first circulation electric pump draws the lubricating fluid; a first group of physical sensors coinciding with:a sensor which determines a rotation speed of the rotor of the first electric pump, a temperature sensor of the control electronics of the first electric pump, a measuring device for measuring the input current intensity coming into the first electric pump, wherein a lubricating fluid temperature measuring device in the reservoir is absent and comprises a means for estimating a lubricating fluid temperature in the reservoir.

In this context, the technical task underlying the present invention is to propose a vehicle and an operating method which enable the use of physical sensors to be optimized. This results in a lower manufacturing and maintenance cost without having to dispense with specific functional features for which these sensors are used.

The technical task mentioned and the objects specified are substantially achieved by a method comprising the features of claim 1. Further embodiments of the invention are outlined in the dependent claims.

Further characteristic features and advantages of the present invention will emerge more clearly from the description and the drawings in which:

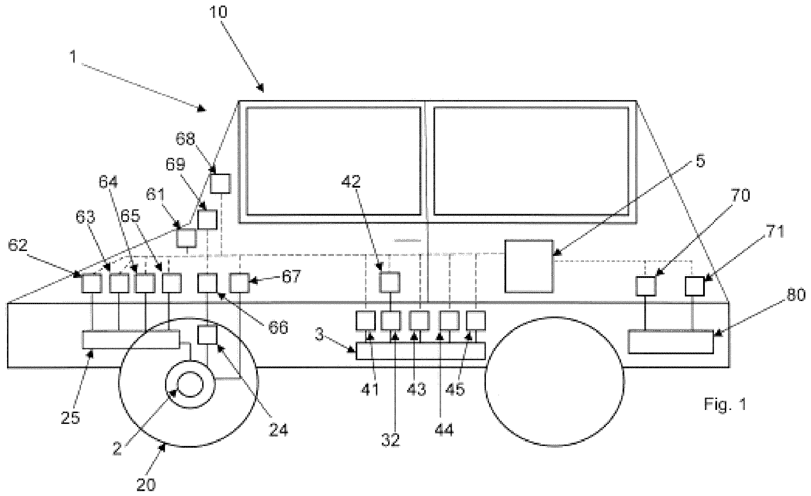

- Figure 1 shows a schematic view of a vehicle ;
- Figure 2 shows a further schematic view of a detail of the vehicle shown in Figure 1;
- Figure 3 shows a thermal model of a portion of an apparatus.

In the attached figures the reference number 1 denotes a motorized apparatus.

This apparatus 1 is typically a vehicle 10, typically a road vehicle, for example a motor car or a train, but also a boat or other type of self-propelled vehicle. It could even be a static apparatus which may be provided with an electrical drive.

The apparatus 1 comprises an engine 2. In the preferred case where the apparatus 1 is a vehicle 1, it also comprises movement means 20, for example driving wheels and a transmission shaft for transmitting the movement to the wheels or to a propeller of a boat, etc. The engine 2 is preferably an engine for driving the movement means 20 of the vehicle. The engine could be an electric motor (in this case the axis connected to the electric motor is known by the commercial name of eAxle), but it could also be an internal-combustion engine. In the case of an electric motor 2 it conveniently comprises an inverter 25.

The motor is also provided with control electronics 24.

The apparatus 1 also comprises means 23 for transmission of the movement generated by the engine 2. These transmission means 23 may comprise for example kinematic mechanisms which help ensure the transmission of the movement from the engine 2 to mechanical actuators (for example the wheels of a vehicle in the case of a motor car).

The apparatus 1 also comprises a first electro-pump 3. The first electro-pump 3 is an electro-pump for circulating a lubricating liquid. This lubricating liquid lubricates at least the engine 2 and/or the transmission means 23. The lubricating liquid is normally oil. The first electro-pump 3 is typically a volumetric pump, in particular a rotary volumetric pump. The first electro-pump 3 comprises a rotor 31 which moves the lubricating liquid. The first electro-pump 3 comprises control electronics 32. Typically these control electronics 32 are located physically on the first electro-pump 3.

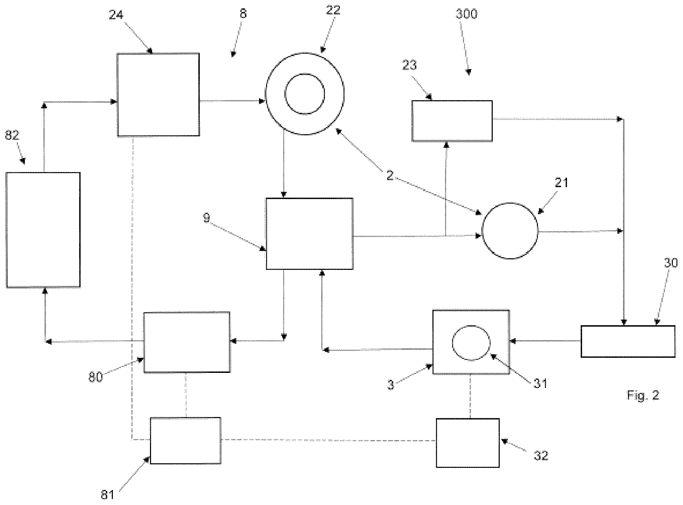

The apparatus 1 further comprises a tank 30 for the lubricating liquid from where the first circulating electro-pump 3 draws the lubricating liquid. This is shown in the schematic view of Figure 2. The lubricating liquid is recirculated into this tank 30 after it has performed its lubricating action on the engine 2 and/or on the transmission means 23. This tank 30 is conventionally called an "oil sump".

The apparatus 1 further comprises a second electro-pump 80 which regulates the circulation of a cooling fluid. This cooling fluid removes heat from the lubrication liquid and from specific portions of the apparatus 1. In Figure 2 the reference number 81 denotes an electronic control unit of said second electro-pump 80.

The apparatus 1 comprises a first set of physical sensors coinciding with:

- a sensor 41 for the rotation speed of the rotor 31 of the first electro-pump 3;
- a sensor 42 for the temperature of the control electronics 32 of the first electro-pump 3;

- a measuring device 43 for measuring the current intensity at the input of the first electro-pump 3;
- a measuring device 44 for measuring the supply voltage of the first electro-pump 3.

It is pointed out that in the present description the word "sensor" is understood as being a synonym of "measuring device".

A measuring device for measuring the temperature of the lubricating liquid inside the tank 30 is not present. This information is however of great importance for control of the apparatus 1. For example, for control of the lubricating and/or cooling flowrate. In this connection the apparatus 1 comprises means 5 for estimating a temperature of the lubricating liquid in the tank 30 depending at least on the information provided by the group of sensors. The estimation means 5 may be integrated in a central ECU or may be defined by the interaction of several peripheral control units such as: the electronic control system 24 of the engine 2, the control electronics 32 of the first electro-pump 3, the control unit 81 of the second electro-pump 8.

The present invention aims to reduce the chains for measurement of the parameters detected and the number of physical sensors present (in the specific case the oil temperature sensor in the sump), based on the computerized processing via the algorithm of the general data available in the electronic control units and the values detected by means of the sensors. In fact, based on the essential information detected by means of some essential physical sensors the value of the parameter which is of interest (in this specific case the temperature of the oil in the sump) may be determined using the algorithm. In this way it is possible to obtain actual virtual sensors (the data is supplied, but in physical terms there is no dedicated sensor).

The apparatus 1 further comprises a sensor 45 for detecting the pressure at a delivery of the first electro-pump 3. "Delivery" of the first electro-pump is not understood as meaning exclusively an output opening of the first electro-pump 3, but also a high-pressure zone situated downstream of said output opening. The estimation means 5 determine the temperature of the lubricating liquid inside the tank 30 depending at least on the data supplied by the first group of sensors and the sensor 45 for the pressure at the delivery of the first electro-pump 3.

This selection of physical sensors is carefully designed and allows the temperature sensor inside the oil sump and the associated wiring to be dispensed with. It is pointed out that the aforementioned sensors are in any case present inside the apparatus 1, in particular in the vehicle 10. Use thereof therefore does not require an additional cost for their installation.

Moreover the Applicant has established that at a predetermined working point (defined by the delivery pressure and flowrate) the current used by the first electro-pump 3 depends essentially on the viscosity of the oil which in turn depends on the temperature inside the oil sump.

The sensor 41 for the rotation speed of the rotor 31 of the first electro-pump 3 provides data relating to the processed flowrate of the first electro-pump 3. Based on this data it is possible to understand whether the use of a greater or smaller amount of electric current by the first electro-pump 3 is determined by a greater or smaller demand of the processed flowrate instead of by a variation in the temperature of the lubricating liquid. Similarly the sensor 45 for the pressure at the delivery of the first electro-pump 3 provides an indication as to whether the greater or smaller amount of electric current used by the first electro-pump 3 is due to the greater or smaller amount of energy transferred to the lubricating liquid instead of a variation in the temperature thereof.

The same comments are applicable to the measuring device 44 for measuring the supply voltage of the first electro-pump 3. In fact, the voltage multiplied by the supply current defines the power used by the pump. The voltage sensor 44 provides an indication as to whether the greater or smaller amount of electric current used by the first electro-pump 3 is due to the greater or smaller amount of power for transferring energy to the lubricating liquid instead of a variation in the temperature thereof. The sensor 42 for the temperature of the control electronics 32 of the first electro-pump 3 is an important parameter since it provides a value of the temperature in the vicinity of the oil sump. The Applicant has in fact established that typically the control electronics 32 are situated in the vicinity of the oil sump (advantageously the distance is less than 15 centimetres).

In the preferred solution the estimation means 5 determine the temperature of the lubricating liquid in the tank 30, receiving as input from physical sensors only the data supplied by each of the sensors of the first group and by the pressure sensor 45 (five measuring devices in total).

It is therefore possible to define a precise mathematical relation which associates the six aforementioned parameters: The Applicant has developed the following formula:

$$T2: a \cdot (T1)^f + b \cdot (V1)^g + c \cdot P^h + d \cdot I^i + e \cdot V^l$$

in which:

V1 = rotation speed indicated by the speed sensor of the rotor 31 of the first electro-pump 3;

P I = pressure indicated by the pressure sensor 45 at the delivery of the first electro-pump 3;

T1 = temperature indicated by a temperature sensor 42 of the control electronics 32 of the first electro-pump 3;

T2 = estimated temperature of the lubricating liquid in the tank 30;

I = supply current determined by the measuring device for measuring the current intensity at the input of the first electro-pump 3;

V = supply voltage determined by the measuring device for measuring the supply voltage of the first electro-pump 3;

a, ... , I = pre-set constants (real numbers).

In general the pre-set constants a,... I are to be defined experimentally depending on the specific electro-pump used and the system in which it is inserted. In order to determine these constants experimentally the person skilled in the art uses the apparatus 1 in which the first electro-pump 3 is inserted. In addition to the sensors of the first group and the pressure sensor 45 at the delivery of the first electro-pump 3 a temperature sensor which measures the temperature of the oil in the tank must also be used. In this way a set of six parameters (V1, P, T1, I, V and temperature measured in the tank 30), which describe a precise operating point, will be measured experimentally.

This operation must be repeated several times at different operating points. The operation could be performed a minimum of 10 times, but it is recommended performing it at least 50 times. By increasing the number of experimental points available, a more precise formula may be obtained. In commerce software is available where by inserting the experimental points it is possible to determine an equation which has several unknown variables (in this case ten) and correlates them. An example of such software is the Matlab identification toolbox. By means of this equation it is therefore possible to determine the values of the constants a, ... , I.

Once available, this equation may be stored in a calculation unit of the apparatus 1 which therefore defines the aforementioned estimation means 5.

In an alternative solution, the values measured and associated with each operating condition may be inserted in a memory unit of the apparatus 1. A set of operating points, each described by ten values associated with the experimental parameters, may then be stored. In this case the estimation means 5 may comprise a calculation unit which, depending on the input parameters provided by the physical sensors, performs an interpolation of the corresponding values of the set of operating points so as to obtain an estimation of the temperature of the tank 30. Possible non-exclusive methods for the interpolation of a plurality of points, each characterized by ten variables known to the person skilled in the art, may be: regression methods, pseudo-inverse matrix, neural networks, etc.

In the preferred solution the engine 2 is an electric motor.

Conveniently it comprises:

- rotating element 21;
- a stator 22.

Below a further approach for estimating the temperature of the lubricating liquid inside the tank 30 will be defined. As will be explained in more detail below, this approach envisages upstream an operation of modelling the thermal performance of the system (motor, inverter, transmission, first electro-pump, cooling pump). The sensors involved must therefore allow a description of the thermal flows.

The vehicle 10 comprises means 61 for determining the resistance torque acting on the motor 2.

In the preferred solution the means 61 for determining the resistance torque use the equation $C = k_t \cdot I_f$ where:

- C is the torque of the motor (measured by a suitable sensor, e.g. a torque meter);
- kt is the torque constant of the electric motor (also comprising the transmission efficiency and the efficiency of the motor itself);
- $I_f$ is the phase current of the motor (measured in this case by a special sensor).

In a particular constructional solution the determination means comprise an electronic unit which also determines this data depending on the speed of movement of the vehicle 10 (detected by a suitable sensor) and a signal emitted by a GPS sensor which indicates whether the road section which it is travelling along or is about to travel along is uphill (optionally indicating its gradient), downhill or flat.

The vehicle 10 further comprises a second group of sensors in turn comprising:

- a sensor 62 for the current intensity at the input of the inverter 25 of the motor 2;
- a sensor 63 for the voltage at the input of the inverter 25 of the motor 2;
- a sensor 64 for the current intensity at the output of the inverter 25 of the motor 2;
- a sensor 65 for the voltage at the output of the inverter 25 of the motor 2;

- a sensor 66 for the temperature of the electronic control system 24 of the motor 2;
- a sensor 67 for the temperature of the stator 22;
- a sensor 68 for measuring a speed of movement of the vehicle 10;
- a sensor 69 which measures the ambient temperature (this sensor 69 measures the temperature outside the vehicle 10; normally it is positioned on the outside of the vehicle 10, for example on the bumpers or a rear-view mirror);
- a sensor 70 for the flowrate of a cooling fluid of the motor 2 and the transmission means 23;
- a sensor 71 for the temperature of the cooling fluid in a predetermined position (for example immediately upstream of the second electro-pump 80).

In this case the estimation means 5 determine the temperature of the lubricating liquid in the tank 30 depending on the input from the first group of sensors, the second group of sensors and the means 61 for determining the resistance torque.

This approach requires a greater number of inputs, but has the advantage that it manages to provide an estimate of the temperature of the lubricating liquid in the tank 30 even if the first electro-pump 3 is not operating. Moreover, the input values listed above have been carefully selected so as to be based on sensors normally existing on the vehicle 10 and therefore do not require additional costs.

In this case the estimation means 5 may comprise a calculation element which implements an equation having as input the values of the parameters previously indicated and as output the estimate of the temperature of the lubricating liquid in the tank 30.

A non-limiting example of an equation could be the following:

$$T2 = a1 \cdot T1^{a2} + b1 \cdot V1^{b2} + d1 \cdot I^{d2} + e1 \cdot V^{e2} + f1 \cdot C^{f2} + g1 \cdot I1^{g2} + h1 \cdot V2^{h2} + i1 \cdot I2^{i2} + m1 \cdot V3^{m2} + n1 \cdot T3^{n2} + o1 \cdot T4^{o2} + p1 \cdot V5^{p2} + q1 \cdot T5^{q2} + r1 \cdot W^{r2} + s1 \cdot T6^{s2}$$

in which:

V1 = rotation speed indicated by the speed sensor 41 of the rotor 31 of the first electro-pump 3;
T1 = temperature indicated by a temperature sensor 42 of the control electronics 32 of the first electro-pump 3;
T2 = estimated temperature of the lubrication liquid inside the tank 30;
I = supply current determined by the measuring device 43 for measuring the current intensity at the input of the first electro-pump 3;
V = supply voltage determined by the measuring device 44 for measuring the supply voltage of the first electro-pump 3;
C = the resistance torque acting on the motor 2 (measured or calculated); I1 = input current of the inverter 25 of the motor 2 determined by the sensor 62;
V2 = voltage at the input of the inverter 25 of the motor 2 determined by the sensor 63;
I2 = current intensity at the output of the inverter 25 of the motor 2 determined by the sensor 64;
V3 = voltage at the output of the inverter 25 of the motor 2 determined by the sensor 65;
T3 = temperature of the control system 24 of the motor 2 determined by the sensor 66;
T4 = temperature of the stator 22 determined by the sensor 67;
V5 = speed of movement of the vehicle 10 determined by the sensor 68;
T5 = ambient temperature (outside the vehicle 10) determined by the sensor 69;
W = flowrate of a cooling fluid of the motor 2 and/or of the transmission means 23 determined by the sensor 70;
T6 = temperature of the cooling fluid in a position determined by the sensor 71;
a1, b1, d1, e1, f1, g1, h1, i1, m1, n1, o1, p1, q1, r1, s1, a2, b2, d2, e2, f2, g2, h2, i2, m2, n2, o2, p2, q2, r2, s2: are constants (defined by real numbers) to be defined depending on the specific components and the specific system.

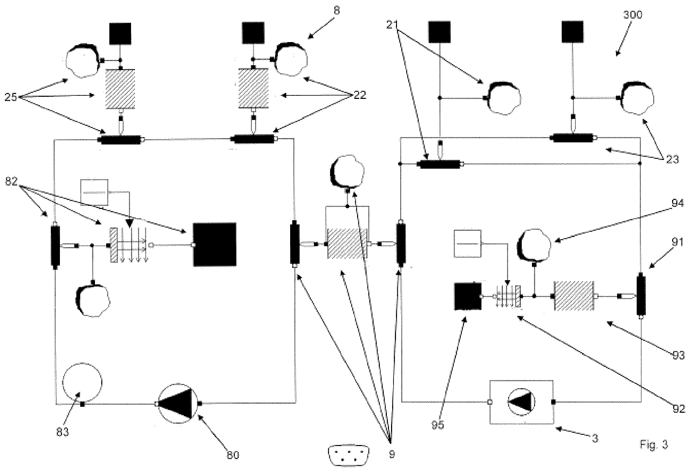

In order to determine these constants a thermal model described below with reference to Figure 3 may be used.

This model was implemented using the modelling software Dymola of the company Dessault Systèmes. The icons in Figure 3 may be easily recognized by the person skilled in the art who is familiar with this software. Each of these icons is associated with a standard component regulated by specific equations integrated within it.

As can be seen in Figure 3, the right-hand part shows in schematic form the circuit 300 of the lubricating liquid. It is important from a thermal point of view since it draws heat from components of the system. The left-hand side shows a cooling circuit 8 with the second electro-pump 80 and a pressure gauge 83 downstream. The two (lubricating and cooling) circuits are interfaced with each other by means of an exchanger indicated by the reference 9 (thermal conductivity 331 W/(mk)). With reference to the lubricating liquid circuit downstream of the exchanger 9 it branches off and part of the lubricating liquid cools the rotating element 21 of the motor 2 and part of it cools the transmission means 23.

The lubricating liquid circuit also models the thermal performance of a housing 91 which surrounds at least the first electro-pump 3 and exchanges heat with the exterior. In particular the element 92 models the heat exchange due to convection with the external environment (the convection coefficient k is equal to 1 W/m$^2$K), the element 93 models the heat exchange due to conduction with the external environment (thermal conductivity 5W/(mK)), the element 95 defines at 293,15K the temperature of the external air.

With reference to the cooling circuit 8 it is pointed out that modelling is performed downstream of the heat exchanger 9 for the thermal performance of the external environment (in particular note the icons which schematically indicate the thermal capacity of the external environment and the convective heat exchange by means of a radiator 82) as well as the thermal performance provided by the inverter 25 (thermal conductivity 200W/(mK)) of the motor 2 and the stator 22 (thermal conductivity 200W/(mK)) of the motor 2. In fact the cooling fluid will also cool these components.

In the particular software used the stone-like icons (all those shaped like 94) schematically indicate the thermal capacity of a component. The rotor 31 will have a thermal capacity value of 500J/K, the transmission means 23 a value of 1000 J/K, the housing 91 a value of 10000 J/K, the radiator 82 a value of 2000 J/K, the inverter 25 a value of 000 J/K, the stator 22 a value of 1000J/K, and the exchanger 9 a value of 2000J/K.

The icons with two parallel lines connected by a plurality of oblique lines illustrate instead the conductive heat exchange. The icons with intersecting horizontal and vertical arrows (such as 92) illustrate the convective heat exchange. In the case of the radiator 82 the convective coefficient k is equal to 100 W/m$^2$K. In this case the temperature of the air is fixed at 293,15K.

As input for this model it is possible to provide a progression, over a pre-coded time interval, of the following parameters: speed of the vehicle 10, resistance torque, current and supply voltage of the motor 2.

The thermal model described above calculates, depending on the inputs and the pre-coded equations (associated with the various components of the Dymola software model) the following output parameters:

- speed of rotation of the rotor 31 of the first electro-pump 3;
- temperature of control electronics 32 of the first electro-pump 3;
- estimated temperature of the lubrication liquid in the tank 30;
- current intensity at the input of the first electro-pump 3;
- supply voltage of the first electro-pump 3;
- resistance torque acting on the motor 2;
- current intensity at the input of the inverter 25 of the motor 2;
- voltage at the input of the inverter 25 of the motor 2;
- current intensity at the output of the inverter 25 of the motor 2;
- voltage at the output of the inverter 25 of the motor 2;
- temperature of the control system of the motor 2;
- temperature of the stator 22;
- speed of movement of the vehicle 10;
- ambient temperature (outside the vehicle 10);
- flowrate of a cooling fluid of the motor 2 and/or of the transmission means 23;
- temperature of the cooling fluid determined by the sensor 71 in a predetermined position.

By providing in addition a concrete physical solution of the system it is also possible to carry out, for the same inputs, experimental tests for measuring the values of given parameters (i.e. the aforementioned output parameters also supplied by the model). At this point the test results and the results of the model may be compared. This enables the thermal model described above to be optimized so that it resembles more closely the test results.

Once the model has been optimized, it is possible to introduce different inputs (understood as being the progression, for a pre-coded time interval, of the following parameters: speed of the vehicle 10, resistance torque, current and supply voltage of the motor 2). In this way the values associated with said output parameters are obtained. These values may then be used (by running them through a suitable software of the type described above) to generate an equation, for example that described above, defining the values of the constants.

The estimation means 5 may then implement this function on the basis of the inputs provided by the first and second groups of sensors, thus obtaining an estimate of the temperature in the oil sump.

The present invention relates moreover to an operating method of an apparatus 1. This apparatus 1 has one or more of the characteristic features described above.

The method comprises the steps of:

- transmitting to said estimation means 5 the data detected by the first group of sensors (identified above);
- determining via said estimation means 5 the temperature of the lubricating liquid present in the tank 30 depending on the inputs obtained from at least the sensors of the first group.

The method also comprises the step of transmitting to the estimation means 5 data detected by a pressure sensor 45 located at a delivery of the first electro-pump 3.

Consequently, the step of determining the temperature of the lubricating liquid present in the tank 30 is also performed depending on the input received from this sensor 45.

The apparatus 1 is conveniently a vehicle 10. It therefore comprises means 20 for movement of the vehicle 1. The engine 2 is a motor driving the movement means 20 of the vehicle.

As mentioned above with reference to the description of the apparatus 1, the step of determining the temperature of the lubrication liquid using said estimation means 5 comprises the step of applying the following formula: $T2: a \cdot (T1)^f + b \cdot (V1)^g + c \cdot P^h + d \cdot I^i + e \cdot V^l$

where the parameters and the constants indicated have already been explained above in the description of the apparatus 1.

The method may also comprise a second and different approach which comprises the implementation of a procedure which in turn comprises the steps of:

    i) determining the resistance torque acting on the motor 2;

    ii) measuring the current intensity at the input of the inverter 25 of the motor 2;

    iii) measuring the voltage at the input of the inverter 25 of the motor 2;

    iv) measuring the current intensity at the output of the inverter 25 of the motor 2;

    v) measuring the voltage at the output of the inverter 25 of the motor 2;

    vi) carrying out a reading of a temperature sensor 66 located on an electronic control system 24 of the motor 2;

    vii) carrying out a reading of a temperature sensor 67 located on a stator 22 of the motor 2, said motor 2 being an electric motor 2 comprising a rotating element 21 and said stator 22;

    vii) measuring a speed of movement of the vehicle 10;

    ix) carrying out a reading of a sensor 69 which measures the ambient temperature outside the vehicle 10;

    x) measuring a flowrate of a cooling fluid of the motor 2 and/or of the transmission means 23;

    xi) carrying out a reading of a sensor 71 for the temperature of the cooling fluid.

The step of determining the temperature of the lubricating liquid present in the tank 30 is performed also depending on the inputs determined by means of the operations indicated in the steps I, ii, iii, iv, v, vi, vii, viii, ix, x, xi (in addition to the inputs from the sensors of the first group).

Optionally the steps of measuring the current intensity and the voltage at the input of the inverter 25 of the motor 2 may be replaced by determination of the electric power at the input of inverter 25 of the motor 2.

Similarly the steps of measuring the current intensity and the voltage output by the inverter 25 of the motor 2 could be replaced by a step for determining the electric power at the output of the inverter 25 of the motor 2.

Using this second approach the step of determining using said estimation means 5 the temperature of the lubrication liquid comprises the step of applying the following formula:

$$T2: a1 \cdot T1^{a2} + b1 \cdot V1^{b2} + d1 \cdot I^{d2} + e1 \cdot V^{e2} + f1 \cdot C^{f2} + g1 \cdot I1^{g2} + h1 \cdot V2^{h2} + i1 \cdot I2i2 + m1 \cdot V3$$

$$^{m2} + n1 \cdot T3^{n2} + o1 \cdot T4^{o2} + p1 \cdot V5^{p2} + q1 \cdot T5^{q2} + r1 \cdot W^{r2} + s1 \cdot T6s^2$$

where the parameters and the constants indicated have already been explained above in the description of the apparatus 1.

Once the estimation of the temperature of the lubricating liquid inside the tank 30 has been performed, for example in one of the manners described above, the method comprises the step of adjusting the operation of the first electro-pump 3 and/or the second electro-pump 80 depending on said estimation.

The present invention achieves some major advantages.

Firstly the invention in question aims to optimize the constructional and assembly costs by eliminating a sensor for measuring the temperature of the lubricating liquid inside the tank 30.

Conveniently this is performed by processing the data to be transferred to the corresponding ECU, obtaining said data from the essential sensors and suitably processing it. As a result of these processing operations it is possible to manage the electro-pump(s) or other devices, with the aim of lubricating/cooling the assembly in a discontinuous and intelligent manner with the least amount of dissipated energy.

**Claims**

1. Method for operation of an apparatus (1), said apparatus being a vehicle and comprising:

   - an engine (2) for driving movement means (20) of the vehicle;
   - means (23) for transmission of the movement generated by the engine (2);
   - a first electro-pump (3), said first electro-pump (3) being an electro-pump for circulating a lubricating liquid of the engine (2) and/or of the transmission means (23) and comprising a rotor (31), which moves the lubricating liquid, and control electronics (32);
   - a tank (30) for the lubricating liquid from where the first circulating electro-pump (3) draws the lubricating liquid;
   - a first group of physical sensors coinciding with:

     a sensor (41) for the rotation speed of the rotor (31) of the first electro-pump (3), a sensor (42) for the temperature of the control electronics (32) for the first electro-pump (3), a measuring device (43) for measuring the current intensity at the input of the first electro-pump (3), a measuring device (44) for measuring the supply voltage of the first electro-pump (3);
     the apparatus does not have a measuring device for measuring the temperature of the lubrication liquid in the tank (30) and comprises estimation means (5) for estimating a temperature of the lubricating liquid inside the tank (30) depending on the inputs obtained from at least the sensors of the first group;
     the method comprises the steps of:

       - transmitting to said estimation means (5) the data detected by said first group of sensors;
       - determining via said estimation means (5) the temperature of the lubricating liquid present in said tank (30) depending on the inputs obtained from at least the sensors of the first group.

2. Method according to Claim 1, **characterized in that** it comprises the step of transmitting to said estimation means (5) data detected by a pressure sensor (45) at a delivery of the first electro-pump (3); the step of determining the temperature of the lubricating liquid present in the tank (30) is also performed depending on the input received from the pressure sensor (45) at the delivery of the first electro-pump (3).

3. Method according to Claim 1, **characterized in that** the engine (2) being a motor driving the movement means (20) of the vehicle, said method comprising implementation of a procedure which in turn comprises the steps of:

     i) determining the resistance torque acting on the motor (2);
     ii) measuring the current intensity at the input of an inverter (25) of the motor (2);
     iii) measuring the voltage at the input of the inverter (25) of the motor (2);
     iv) measuring the current intensity at the output of the inverter (25) of the motor (2);
     v) measuring the voltage at the output of the inverter (25) of the motor (2);
     vi) carrying out a reading of a temperature sensor (66) located on an electronic control system (24) of the motor;
     vii) carrying out a reading of a temperature sensor (67) located on a stator (22) of the motor (2), said motor (2) being an electric motor comprising a rotating element (21) and said stator (22);
     viii) measuring a speed of movement of the vehicle (10);
     ix) carrying out a reading of a sensor (69) which measures the ambient temperature outside the vehicle (10);
     x) measuring a flowrate of a cooling fluid of the motor (2) and/or of the transmission means (23);
     xi) carrying out a reading of a sensor (71) for the temperature of the cooling fluid; the step of determining the temperature of the lubricating liquid present in the tank (30) being performed depending also on the inputs determined by means of the operations indicated in the steps i, ii, iii, iv, v, vi, vii, viii, ix, x, xi.

4. Method according to Claim 2, **characterized in that** the step of determining using said estimation means (5) the temperature of the lubrication liquid comprises the step of applying the following formula:

$$T2: a \cdot (T1)^f + b \cdot (V1)^g + c \cdot P^h + d \cdot I^i + e \cdot V^l$$

in which:

   V1 = rotation speed indicated by the speed sensor (41) of the rotor (31) of the first electro-pump (3);
   P = pressure indicated by the pressure sensor (45) at the delivery of the first electro-pump (3);

T1 = temperature indicated by a sensor (42) for sensing the temperature of control electronics (32) of the first electro-pump (3);

T2 = temperature of the lubrication liquid inside the tank (30);

I = supply current determined by the measuring device (43) for measuring the current intensity at the input of the first electro-pump (3);

V = supply voltage determined by the measuring device (44) for measuring the supply voltage of the first electro-pump (3);

a, b, c, d, e, f, g, h, i, I = pre-set constants (real numbers).

**Patentansprüche**

1. Verfahren zum Betreiben einer Vorrichtung (1), wobei die Vorrichtung ein Fahrzeug ist und Folgendes umfasst:

   - eine Antriebsmaschine (2) zum Antreiben von Bewegungsmitteln (20) des Fahrzeugs,
   - Mittel (23) zum Übertragen der von der Antriebsmaschine (2) erzeugten Bewegung,
   - eine erste Elektropumpe (3), wobei die erste Elektropumpe (3) eine Elektropumpe zum Umwälzen einer Schmierflüssigkeit der Antriebsmaschine (2) und/oder der Übertragungsmittel (23) ist und einen Rotor (31), der die Schmierflüssigkeit bewegt, und Steuerelektronik (32) umfasst,
   - einen Tank (30) für die Schmierflüssigkeit, aus dem die erste umwälzende Elektropumpe (3) die Schmierflüssigkeit zieht,
   - eine erste Gruppe physikalischer Sensoren, die mit Folgendem übereinstimmt:
   einem Sensor (41) für die Drehzahl des Rotors (31) der ersten Elektropumpe (3), einem Sensor (42) für die Temperatur der Steuerelektronik (32) für die erste Elektropumpe (3), einem Messgerät (43) zum Messen der Stromstärke am Eingang der ersten Elektropumpe (3), einem Messgerät (44) zum Messen der Versorgungsspannung der ersten Elektropumpe (3),

   wobei die Vorrichtung kein Messgerät zum Messen der Temperatur der Schmierflüssigkeit in dem Tank (30) aufweist und Schätzmittel (5) zum Schätzen der Temperatur der Schmierflüssigkeit in dem Tank (30) abhängig von den Eingaben, die von mindestens den Sensoren der ersten Gruppe erzielt werden, umfasst, wobei das Verfahren folgende Schritte umfasst:

   - Übertragen der von der ersten Gruppe von Sensoren ermittelten Daten an die Schätzmittel (5),
   - Bestimmen der Temperatur der in dem Tank (30) vorhandenen Schmierflüssigkeit mittels der Schätzmittel (5) abhängig von den Eingaben, die von mindestens den Sensoren der ersten Gruppe erzielt werden.

2. Verfahren nach Anspruch 1, **dadurch gekennzeichnet, dass** es den Schritt des Übertragens der von einem Drucksensor (45) an einer Zufuhr der ersten Elektropumpe (3) ermitteln Daten an die Schätzmittel (5) umfasst, wobei der Schritt des Bestimmens der Temperatur der in dem Tank (30) vorhandenen Schmierflüssigkeit außerdem abhängig von der Eingabe ausgeführt wird, die von dem Drucksensor (45) an der Zufuhr der ersten Elektropumpe (3) empfangen wird.

3. Verfahren nach Anspruch 1, **dadurch gekennzeichnet, dass** die Antriebsmaschine (2) ein Motor ist, der die Bewegungsmittel (20) des Fahrzeugs antreibt, wobei das Verfahren das Implementieren eines Vorgangs umfasst, der wiederum folgende Schritte umfasst:

   I) Bestimmen des Widerstandsdrehmoments, das auf den Motor (2) wirkt,
   II) Messen der Stromstärke am Eingang eines Umrichters (25) des Motors (2),
   III) Messen der Spannung am Eingang des Umrichters (25) des Motors (2),
   IV) Messen der Stromstärke am Ausgang des Umrichters (25) des Motors (2),
   V) Messen der Spannung am Ausgang des Umrichters (25) des Motors (2),
   VI) Ausführen eines Ablesens eines Temperatursensors (66), der sich an einem elektronischen Steuersystem (24) des Motors befindet,
   VII) Ausführen eines Ablesens eines Temperatursensors (67), der sich an einem Stator (22) des Motors (2) befindet, wobei der Motor (2) ein Elektromotor ist, der ein drehendes Element (21) und den Stator (22) umfasst,
   VIII) Messen einer Bewegungsgeschwindigkeit des Fahrzeugs (10),
   IX) Ausführen eines Ablesens eines Sensors (69), der die Umgebungstemperatur außerhalb des Fahrzeugs (10) misst,

X) Messen einer Durchflussmenge von Kühlfluid des Motors (2) und/oder der Übertragungsmittel (23),

XI) Ausführen eines Ablesens eines Sensors (71) für die Temperatur des Kühlfluids, wobei der Schritt des Bestimmens der Temperatur der in dem Tank (30) vorhandenen Schmierflüssigkeit außerdem abhängig von den Eingaben ausgeführt wird, die mittels der Vorgänge bestimmt werden, die in den Schritten I, II, III, IV, V, VI, VII, VIII, IX, X, XI angegeben sind.

**4.** Verfahren nach Anspruch 2, **dadurch gekennzeichnet, dass** der Schritt des Bestimmens mit Hilfe der Mittel (5) zum Schätzen der Temperatur der Schmierflüssigkeit den Schritt des Anwendens der folgenden Formel umfasst:

$$T2: a \cdot (T1)^f + b \cdot (V1)^g + c \cdot P^h + d \cdot I^i + e \cdot V^l,$$

wobei

V1 = Drehzahl, angegeben durch den Drehzahlsensor (41) des Rotors (31) der ersten Elektropumpe (3),

P = Druck, angegeben durch den Drucksensor (45) an der Zufuhr der ersten Elektropumpe (3),

T1 = Temperatur, angegeben durch einen Sensor (42) zum Abfühlen der Temperatur von Steuerelektronik (32) der ersten Elektropumpe (3),

T2 = Temperatur der Schmierflüssigkeit in dem Tank (30),

I = Versorgungsstrom, bestimmt durch das Messgerät (43) zum Messen der Stromstärke am Eingang der ersten Elektropumpe (3),

V = Versorgungsspannung, bestimmt durch das Messgerät (44) zum Messen der Versorgungsspannung der ersten Elektropumpe (3),

a, b, c, d, e, f, g, h, i, l = voreingestellte Konstanten (reelle Zahlen).


## Revendications

**1.** Procédé de fonctionnement d'un appareil (1), ledit appareil étant un véhicule et comprenant :

- un moteur (2) pour entraîner un moyen de mouvement (20) du véhicule ;
- un moyen (23) pour la transmission du mouvement généré par le moteur (2) ;
- une première électropompe (3), ladite première électropompe (3) étant une électropompe pour faire circuler un liquide lubrifiant du moteur (2) et/ou du moyen de transmission (23) et comprenant un rotor (31), qui déplace le liquide lubrifiant, et un circuit électronique de commande (32) ;
- un réservoir (30) pour le liquide lubrifiant à partir duquel la première électropompe de circulation (3) aspire le liquide lubrifiant ;
- un premier groupe de capteurs physiques coïncidant avec :

    un capteur (41) pour la vitesse de rotation du rotor (31) de la première électropompe (3), un capteur (42) pour la température du circuit électronique de commande (32) pour la première électropompe (3), un dispositif de mesure (43) pour mesurer l'intensité de courant au niveau de l'entrée de la première électropompe (3), un dispositif de mesure (44) pour mesurer la tension d'alimentation de la première électropompe (3) ;
    l'appareil n'ayant pas de dispositif de mesure pour mesurer la température du liquide de lubrification dans le réservoir (30) et comprenant un moyen d'estimation (5) pour estimer une température du liquide lubrifiant à l'intérieur du réservoir (30) en fonction des entrées obtenues à partir d'au moins les capteurs du premier groupe ;
    le procédé comprenant les étapes consistant à :

        - transmettre audit moyen d'estimation (5) les données détectées par ledit premier groupe de capteurs ;
        - déterminer par le biais dudit moyen d'estimation (5) la température du liquide lubrifiant présent dans ledit réservoir (30) en fonction des entrées obtenues à partir d'au moins les capteurs du premier groupe.

**2.** Procédé selon la revendication 1, **caractérisé en ce qu'**il comprend l'étape consistant à transmettre audit moyen d'estimation (5) des données détectées par un capteur de pression (45) au niveau d'une distribution de la première électropompe (3) ; l'étape consistant à déterminer la température du liquide lubrifiant présent dans le réservoir (30) étant également mise en œuvre en fonction de l'entrée reçue à partir du capteur de pression (45) au niveau de la distribution de la première électropompe (3).

3. Procédé selon la revendication 1, **caractérisé en ce que** le moteur (2) est un moteur entraînant le moyen de mouvement (20) du véhicule, ledit procédé comprenant la mise en œuvre d'une procédure qui à son tour comprend les étapes consistant à :

   i) déterminer le couple de résistance agissant sur le moteur (2) ;
   ii) mesurer l'intensité de courant au niveau de l'entrée d'un onduleur (25) du moteur (2) ;
   iii) mesurer la tension au niveau de l'entrée de l'onduleur (25) du moteur (2) ;
   iv) mesurer l'intensité de courant au niveau de la sortie de l'onduleur (25) du moteur (2) ;
   v) mesurer la tension au niveau de la sortie de l'onduleur (25) du moteur (2) ;
   vi) effectuer une lecture d'un capteur de température (66) situé sur un système de commande électronique (24) du moteur ;
   vii) effectuer une lecture d'un capteur de température (67) situé sur un stator (22) du moteur (2), ledit moteur (2) étant un moteur électrique comprenant un élément rotatif (21) et ledit stator (22) ;
   viii) mesurer une vitesse de mouvement du véhicule (10) ;
   ix) effectuer une lecture d'un capteur (69) qui mesure la température ambiante à l'extérieur du véhicule (10) ;
   x) mesurer un débit d'un fluide de refroidissement du moteur (2) et/ou du moyen de transmission (23) ;
   xi) effectuer une lecture d'un capteur (71) pour la température du fluide de refroidissement ; l'étape consistant à déterminer la température du liquide lubrifiant présent dans le réservoir (30) étant mise en œuvre en fonction également des entrées déterminées au moyen des opérations indiquées dans les étapes i, ii ,iii, iv, v, vi, vii, viii, ix, x, xi.

4. Procédé selon la revendication 2, **caractérisé en ce que** l'étape consistant à déterminer à l'aide dudit moyen d'estimation (5) la température du liquide de lubrification comprend l'étape consistant à appliquer la formule suivante :

$$\text{T2 : a} \cdot (\text{T1})^f + \text{b} \cdot (\text{V1})^g + \text{c} \cdot \text{P}^h + \text{d} \cdot \text{I}^i + \text{e} \cdot \text{V}^l$$

dans laquelle :

   V1 = vitesse de rotation indiquée par le capteur de vitesse (41) du rotor (31) de la première électropompe (3) ;
   P = pression indiquée par le capteur de pression (45) au niveau de la distribution de la première électropompe (3) ;
   T1 = température indiquée par un capteur (42) pour détecter la température du circuit électronique de commande (32) de la première électropompe (3) ;
   T2 = température du liquide de lubrification à l'intérieur du réservoir (30) ;
   I = courant d'alimentation déterminé par le dispositif de mesure (43) pour mesurer l'intensité de courant au niveau de l'entrée de la première électropompe (3) ;
   V = tension d'alimentation déterminée par le dispositif de mesure (44) pour mesurer la tension d'alimentation de la première électropompe (3) ;
   a, b, c, d, e, f, g, h, i, l = constantes prédéfinies (nombres réels).

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011282551 A